Europäisches Patentamt

European Patent Office

Office européen des brevets

(11) Publication number: **0 317 229**
**A2**

# (12) EUROPEAN PATENT APPLICATION

(21) Application number: 88310714.6

(22) Date of filing: 14.11.88

(51) Int. Cl.⁴: **G07F 7/08**

(30) Priority: 13.11.87 US 119936

(43) Date of publication of application:
24.05.89 Bulletin 89/21

(84) Designated Contracting States:
BE CH DE ES FR GB IT LI NL SE

(71) Applicant: **LIGHT SIGNATURES, INC.**
**1901 Avenue of the Stars**
**Los Angeles, CA 90067(US)**

(72) Inventor: **Goldman, Robert Norman**
**1042 Koloa Street**
**Honolulu Hawaii 96816(US)**

(74) Representative: **Coles, Graham Frederick**
**Sommerville & Rushton et al**
**11 Holywell Hill**
**St Albans Hertfordshire AL1 1EZ(GB)**

(54) **Verification methods and systems.**

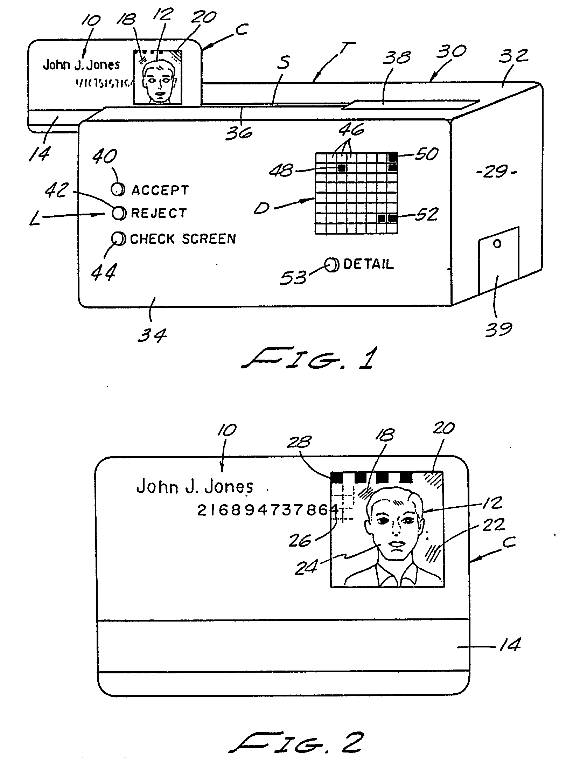

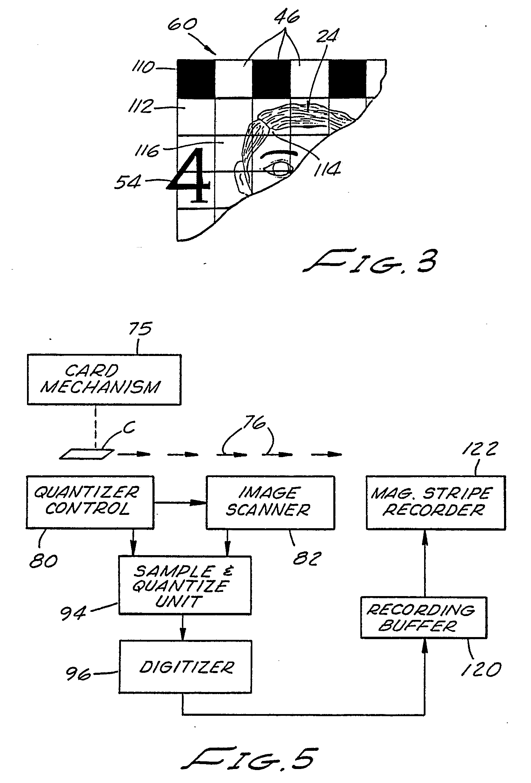

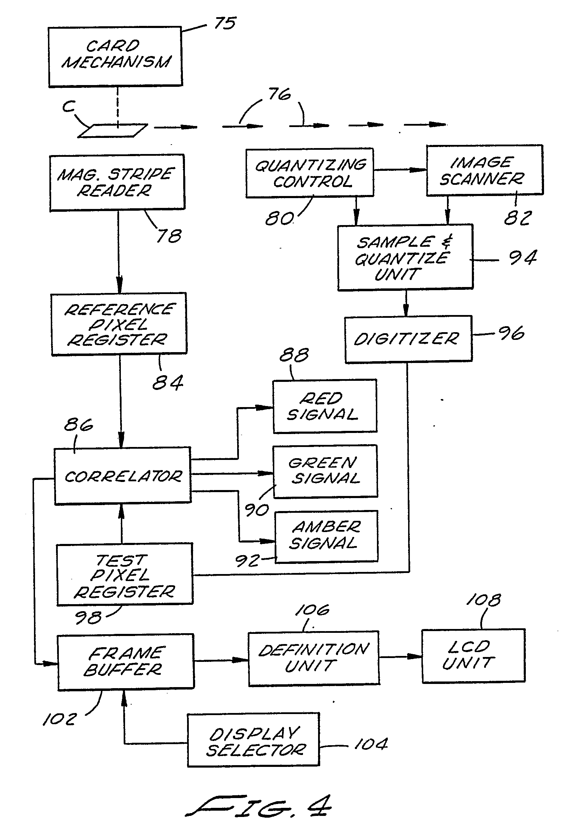

(57) Verification of a card C involves moving it through a slot S of a terminal T to derive test signals representative of pixels of a sensed card-area 12 that includes a likeness 24 (FIG 2) of the cardholder together with part 26 (FIG 2) of his alpha-numeric identifier 10. The test signals, after sampling, are quantized (94 FIG 4) against two controlled thresholds which identify each pixel of the area 12 as being darker than, lighter than, or about the same as the detected average optical density (80 FIG 4) of the sensed area 12. When digitized (96 FIG 4), the quantized signals are compared (86 FIG 4) with digital-data signals read (78 FIG 4) from a magnetic recording 14 that was made during earlier (FIG 5) sensing of the area 12. Lamps L indicate the existence of acceptable (40; 90 FIG 4), unacceptable (42; 88 FIG 4) or uncertain (44; 92 FIG 4) overall correlation between the compared signals. A two-dimensional liquid-crystal display D shows the correlation results graphically in binary pixel form (black/white), with pixel-to-pixel correspondence with the sensed area; operation of a button 53 expands the display D to show sub-pixels.

FIG. 1

## Verification Methods and Systems

This invention relates to methods of verification, and verification systems, of the kind in which identification indicia borne by a document or other item are sensed to derive test signals dependent on the sensed indicia, and comparison is made for correlating the test signals with stored data relating to the indicia and providing an output dependent on the correlation between them.

Verification methods and systems of this kind are known for authenticating cards that serve as passes, permits, licences, or are used in banking or other financial transactions. Such cards bear indicia in the form of a fingerprint, photographic likeness, signature or account number that is printed or otherwise affixed to the card. It is necessary that the authenticity of such a card can be verified so as to give assurance that it is both genuine and unmodified.

Efficient verification of cards or other items in methods and systems of the kind specified involves several considerations which include the ease and speed with which authenticity can be checked, and the reliability of the process involved. The verification process should not only detect fakes, but also reject items where the relevant indicia have been altered. Yet, the system should not reject genuine cards or other items where the indicia is simply stained, worn, faded, or otherwise subject to immaterial change; rejection of a genuine, unaltered card or other item in such circumstances, can cause embarrassment, and may even prompt legal action.

It is an object of the present invention to provide a verification method and system of the kind specified that may be used to facilitate verification of documents or other items (for example, cards), with enhanced efficiently in the above respects.

According to one aspect of the present invention, a method of verification of the kind specified is characterised in that the test signals are representative of pixels of a sensed area that includes at least part of the said indicia, that the comparison is made between these signals and pixel-representative signals derived from the stored data, and that pixels dependent on the comparison results are displayed to manifest the correlation graphically.

The pixel-representative signals derived from the stored data may be derived from data stored on the said item in a magnetic record or otherwise.

The display may correspond pixel-to-pixel with the sensed area, and may be of binary pixel form.

The test signals may be signals quantized to discrete thresholds of pixel-value within said area. In this regard, the signal-quantization may be related to two sensing-thresholds so as to establish three possible values for each test signal; at least one of these sensing-thresholds may be set in accordance with an average of sensed pixel-values within the said area.

Verification may be indicated as accepted, uncertain, or rejected according to whether the test signals overall, meet one or the other of predetermined criteria defining acceptable, intermediate and unacceptable correlation with the stored data. In these circumstances, the correlation may be manifested graphically as aforesaid at least in the event that verification is indicated as uncertain.

The said area may comprise at least part of a photographic image, in particular a likeness of an individual, represented on the said item. At least part of alpha-numeric information borne by the said item may lie within the area, and may be superimposed therein with the said image.

According to another aspect of the invention, a verification system in which means for sensing identification indicia borne by a document or other item presented to the system, derives test signals dependent on the sensed indicia, and comparison is made for correlating the test signals with stored data relating to the indicia and providing an output dependent on the correlation between them, is characterised in that the sensing means derives the test signals as representative of pixels of a sensed area that includes at least part of the said indicia, that the comparison is made between these signals and pixel-representative signals derived from the stored data, and that the system includes display means for providing a graphic display dependent on the comparison results.

The system according to the invention may include a reader device for reading the stored data from the document or other item presented to the system, and in this respect the reader device may be a magnetic-stripe reader.

The display means, which may provide a display corresponding pixel-to-pixel with the area sensed by said sensing means and be of binary pixel form, may be a liquid-crystal device. Furthermore, the display means may include provision for selectively increasing the number of pixels displayed.

As in the method of the present invention, the test signals may be derived as signals quantized to discrete thresholds of pixel-value within said area, and the signal-quantization may be related to two sensing-thresholds so as to establish three possible values for each test signals. Moreover, the system may include means for deriving an average of sensed pixel-values within the said area, and in this regard at least one of the sensing-thresholds may be set in accordance with the derived average.

The system may include indicator means for indicating that verification is accepted, uncertain, or rejected according to whether the test signals overall, meet one or the other of predetermined criteria defining acceptable, intermediate and unacceptable correlation with the stored data. In this event, the correlation may be manifested graphically as aforesaid, at least in the event that verification is indicated as uncertain.

The method and system of the present invention may involve a small, self-contained, point-of-use terminal that is operative to verify documents having a specific form, for example, that of an identification or credit card. In this latter event, each card may bear image indicia together with a magnetic stripe or other machine-readable record to provide an "escort" memory of at least a portion of the image indicia. The image indicia might comprise the name of the holder, his card number and his photograph, and any or all of these could be carried as image data (pixels) in the escort memory; the card may incorporate other features to secure the identification (for example, the card might incorporate features for on-line operation and value decrementing as well as other anti-counterfeiting features).

The correlation revealed as a result of comparison between the sensed indicia and what is contained in the escort memory, may be revealed as a two-dimensional display of test results related to the image of interest. More especially, the display may reveal specific areas of the card where a favourable correlation was not achieved. Thus the operator of the terminal would be assisted greatly in determining the authenticity of marginal or questionable cards.

The present invention is also concerned with a method of producing a document or other item of a kind for use in a method or with a system as set out above, in which indicia borne by the said item is sensed and signals in accordance with the sensed indicia are recorded on the said item in machine-readable form. According to the invention, a method of this kind is characterised in that the signals are representative of pixels of a sensed area of said item that includes at least part of the said indicia.

A method of verification and a verification system according to the present invention, together with a method of producing cards for use with such method and system, will now be described, by way of example, with reference to the accompanying drawings, in which:

FIGURE 1 is a perspective view illustrating the verification system as in use during verification of a card;

FIGURE 2 is an enlarged plan view of the card of FIGURE 1;

FIGURE 3 is a fragmentary representation of part of the card of FIGURE 2;

FIGURE 4 is a block schematic diagram of the system of FIGURE 1; and

FIGURE 5 is a block schematic diagram of equipment used for the production of cards for use in the system of FIGURE 1.

Referring to FIGURE 1, a card C is shown entered in a slot S in a terminal T of the verification system, in preparation for movement manually from left to right in the slot S. At the end of the stroke, the card C momentarily drops within the terminal T to a fully concealed location. During such movement, the card C is sensed to provide data which is analyzed to actuate signal lamps L selectively, and to provide a display D.

The system is used in the above respect by an operator for verifying or determining the authenticity of the card C and confirming its relationship to the person presenting it. Specifically, the operator first glances at the card-holder and the card to establish that there is a reasonable degree of coincidence. The card C is then placed in the slot S of the terminal T and manually actuated through the sensing slot S. After the card C is sensed, the data derived from it is processed within the terminal T to control the lamps L and the display D.

The operator is provided with a first level of information by the lamps L, and with a second level by the display D. The lamps L indicate "accept", "reject", or "check screen" according to whether certain verification criteria are clearly satisfied, clearly not satisfied, or are satisfied to an intermediate standard only, by the card C . The instruction "check screen" directs the operator's attention to the display D which reveals, in a black-and-white pattern, those specific areas of an image on the card C which fail to coincide with reference data for the image. From the information provided by the display D, the operator can effectively determine whether the reason for the card C failing clearly to satisfy the verification criteria is important or otherwise, and can thereby resolve uncertainty as to authenticity of the card.

Basically, the terminal T determines area-by-area the degree to which an image on the card C matches machine-readable picture reference-data recorded on the card. Visual representation is provided by the display D indicating the locations within the image where discrepancies or deviations, which may be alterations, exist on the card. At the same time, the terminal T detects whether the data on the card has, for example, been lifted from another card, as well as whether the image on the card has been altered, so as to determine whether the card is counterfeit. Thus, in total, an accurate appraisal of card authenticity is facilitated, enabling the operator to make effective judgement as to the acceptability or otherwise of the card C.

Referring to FIGURE 2, the card C has a traditional format and may be formed of plastics, paper-laminate or any of a variety of other sheet materials well-known in the prior art. A specific individual is identified by the card as the assigned holder. More particularly, the card carries indicia in the form of print 10 and a photographic likeness 12 representative of the subject individual.

The card C exemplifies a multitude of possible formats that may be utilized in accordance with the present invention, in that it carries image indicia, specifically in the form of the print 10 and photographic likeness 12, which is machine readable to provide representative picture data. Furthermore, the card C in accordance with the invention, carries an escort memory which in this instance takes the form of a magnetic stripe 14 on the card C.

Basically, the system of the present invention involves sensing the picture image indicia to provide pixel test signals which are compared with pixel reference signals read from the escort memory. If the degree of coincidence is not sufficiently high to assume that the photograph has not been altered, the display D (FIGURE 1) reveals the specific areas of the image which failed to coincide with the reference standard.

In the disclosed embodiment of the present invention, the test picture or image is restricted to the confines of the photographic likeness 12, but in different applications, and with different formats, the test image might embrace other forms of machine-readable indicia on a card.

As illustrated in FIGURES 1 and 2, the card C has some defects. Specifically, the card has defects 18, 20 and 22, which might be stains, wear spots, faded areas or areas of alteration or tampering. In accordance with the principles of the present invention, the locations of the defects 18, 20 and 22 (remote from the critical areas of the likeness 12) indicates that they are likely to be innocent.

In operation of the terminal T, the defects 18, 20 and 22 are detected and specifically manifest in the display D (FIGURE 1). Consequently, the operator of the terminal T can readily decide that the card is valid by observing the degree of coincidence between the critical areas of the photographic likeness 12 and the indicated areas of discrepancy. As indicated above, the illustrated favourable separation of the defects 18, 20 and 21 from the cardholder's likeness 12 would not normally indicate that there had been interference with the card C, or that the card is other than authentic.

Considering the photographic likeness 12 of the card C in greater detail (FIGURE 2), identification indicia includes the subject's face 24 and a portion of his account number 26. Also, the likeness includes a line 28 which is alternately black and white and which facilitates detection and scanning alignment of the photographic likeness 12 using well known prior-art techniques.

Referring again specifically to FIGURE 1, the terminal T for processing the card C, has an end panel 29, a top panel 32 (defining the slot S) and a front panel 34 which carries the operating instrumentation. The slot S in the top panel 32 is open at the left-hand end (not shown) to receive the card C for movement through an initial length 36 in which the magnetic stripe 14 is read. At the right-hand end, the slot S defines an enlarged section 38 through which the card drops to be completely received in the housing 30 for optical sensing of the photographic likeness 12. Accordingly, incorporating well known principles of the prior art, the initial motion of the card C is accomplished manually by moving the card through the length 36. When the card reaches the section 38, it is grasped mechanically to be lowered, sensed, and then raised to extend from the housing 30 for convenient manual removal.

The end panel 29 of the housing 30 incorporates a door 39 for access to controls (not shown) for adjustment and preparation of the terminal T. Operating instrumentation is carried on the front panel 34 of the housing 30. Such instrumentation includes the signal lamps L, which comprise a green lamp 40 designated "accept", a red lamp 42 designated "reject", and a yellow or amber lamp 44 designated "check screen", that enables preliminary evaluation of card authenticity to be made.

The front panel 34 also carries the display D, which, as illustrated, is divided into an array of individual pixels 46 that are represented somewhat in an idealized form resembling a blank crossword puzzle. The face of the display device D may be scored to indicate grid lines, and these lines may be designated with coordinate numbers to assist in visual correlation. A button 53 on the front panel 34 can be depressed to expand each pixel 46 in the dispay to four sub-pixels, as explained below.

The display D is binary in the sense that pixels 46 are either back or white (no grey-scale pixels). The white display pixels indicate areas of acceptable comparison between the reference pixel data and the freshly observed test pixel data. Conversely, black display pixels indicate sub-image areas which do not meet a requisite degree of coincidence; the black display pixels coincide in area relationship with the defect on the card C. In this regard, therefore, the defects 18, 20 and 22 (FIGURE 2) show up in the display D as black display pixel groups 48, 50 and 52 (FIGURE 1). Thus, the operator's attention is drawn specifically to the questionable areas of the picture enabling a rapid and effective determination of their relevance or otherwise, to be made using human faculties.

For a better appreciation of the development of the area-by-area relationship between the display D (FIGURE 2) and the photographic likeness 12 (FIGURE 2), reference will now be made to FIGURE 3. The subject's face 24 and the digit 54 (numeral "4") of the account number 26 are shown superimposed on dissection pixel grid 60. This indicates the area relationship between the display D and the photographic likeness 12; however, in the interests of understanding, the figures are not necessarily proportioned, and the pixel grid 60 is shown enlarged and idealized with square pixels. The represented pixels 46 of the display device D may be much larger than the pixels of the sensing apparatus, and as a related consideration in this latter regard, detail can be increased by sub-pixel display. The dissection of the photographic likeness 12 into image pixels, and the comparative test of such image pixels with binary values (black or white) for display pixels, is described further below.

Reference will now be made to FIGURE 4 which illustrates the structural apparatus embodied in the terminal T of FIGURE 1. In that regard, as indicated above, the card C is guided for manual movement and is also moved by a mechanism. The structure for guiding and moving the card C is represented collectively by a block designated as card mechanism 75 (upper left). The card mechanism 75 may take any of a variety of mechanical forms as well known in the prior art to guide and move documents for magnetic and optical reading.

As depicted symbolically in FIGURE 4, the card mechanism 75 moves the card C along a path designated by arrows 76, exposing the card C in sequence to a magnetic stripe reader 78, a quantizing control 80 and an optical image scanner 82. Functionally, the magnetic stripe reader 78 senses the magnetic stripe 14 (FIGURE 2). Next, the quantizing control 80 and the image scanner 82 optically sense and dissect the area of the photographic likeness 12. Thus, reference and test data are provided for subsequent processing.

The magnetic stripe 14 is recorded with image pixel reference data. Specifically, the magnetic stripe reader 78 senses the stripe 14 to provide reference data developed from a previous scanning and dissection of the photographic likeness 12. In verifying the card, the photographic likeness 12 is again sensed (by the quantizing control 80 and the scanner 82) to provide data which is processed for dissecting the image into image pixel test data. As explained in detail below, the terminal T correlates the test data with the reference data for a pixel-to-pixel determination which then energizes one of the signal lamps L and actuates the graphic binary pixel display D (FIGURE 1).

The magnetic-stripe reader 78 (FIGURE 4) is coupled to a reference pixel register 84 for storing the reference data. From the register 84, signals representative of the reference data are supplied to a correlator 86. The correlator 86 receives test image pixel data to accomplish a comparison between the reference and test data, and, according to the result of this comparison, selectively energizes one of the signal lamps L (FIGURE 1), namely, the lamp 42 of a red signal 88, the lamp 40 of a green signal 90, or the lamp 44 of an amber signal 92. The display D is also activated.

The test data is derived by fresh sensing of the card C by the quantizing control 80 and the image scanner 82. The control 80 and scanner 82 are connected to a sample and quantize unit 94 which is in turn connected to an analog-digital converter or digitizer 96. Digital signals representative of individual image pixels are supplied from the digitizer 96 to a test register 98 which is in turn coupled to the correlator 86.

In addition to selectively actuating the colour signals 88, 90 and 92, the correlator 86 also supplies binary pixel signals for actuating the display D as illustrated in FIGURE 1. Specifically, binary signals representative of individual pixels for the display D are supplied to a frame buffer 102. Various forms of frame buffer are well known in the prior art capable of functioning as the frame buffer 102 to provide a refreshed video display. In that regard, the buffer 102 is controlled by a display selector 104 for providing various dispay control formats. For example, as mentioned above, displays of different sizes of pixel resolution may be provided. Selective portions of an image also, could be displayed. Binary pixel signals for the display are provided from the frame buffer 102 through a definition unit 106 to a liquid-crystal display 108.

Generally, depending on the application and objectives, displays of varying numbers of pixels may be selected. For example, a coarse display may involve an eight-by-eight array resulting in a sixty-four pixel display pattern. Somewhat higher definition may be provided by a sixteen-by-sixteen array of two hundred and fifty-six sub-pixels. Such an array is considered in detail below as effective for the capacity of the magnetic stripe 14. However, further increased resolution and definition may be accomplished by the display of even more sub-pixels as, for example, a thirty-two-by-thirty-two display to provide one thousand and twenty-four sub-pixels.

Before considering the detailed operation of a system as depicted in FIGURE 4, some further explanation with regard to the dissection of the image indicia represented by the photographic likeness 12 (FIGURE 2), is appropriate. The pixel data from the photographic likeness is quantized based on three amplitude ranges. For example, if individual pixels are sensed with a grey-scale range of one hundred, individual pixels might be quantized to three amplitude classifications: zero through thirty-three, thirty-four through sixty-six, and sixty-seven through ninety-nine. Quantization to a relatively small number of levels is effective, as will be apparent with further consideration. Some further analysis of FIGURE 3 in that regard will be informative.

As indicated above, FIGURE 3 represents an overlay of the black-and-white or binary pixel display D superimposed on the photographic likeness 12. The representation is idealized, and it is convenient for the purposes of initial explanation to relate description to the individual pixels (rather than to sub-pixels), of the photographic likeness 12. Furthermore, a range or grey-scale of pixel-sensed amplitude values from zero to ninety-nine, is assumed, this being the range of signal amplitudes manifesting the degree to which a pixel varies between black and white. As a specific example, note that a pixel 110 (upper left of FIGURE 3) is totally black (value zero) while a pixel 112 (immediately below) is completely white (value ninety-nine).

Most pixels of a normal image fall somewhere between the two extremes of the grey-scale. For example, a pixel 114 (FIGURE 3) might have an amplitude of sixty on a scale from zero to nine-nine. As another example, a pixel 116 might have an amplitude value of twenty. In operation of the disclosed embodiment. individual pixels are quantized to represent three levels of signal amplitude or optical density, in relation to the average overall density of the image, e.g. photographic likeness 12. Image pixels are individually classed as: (a) definitely darker than the average overall density; (b) definitely lighter than the average overall density; or (c) close to the average overall density. Only image pixels of classifications (a) and (b) are used to validate an image. However, it is necessary to record image pixels of class (c) to properly locate the positions in the photograph of other pixels.

The three distinct levels of represented image pixel optical density for the likeness 12 can be manifest by two binary bits. In accordance with the above classification, the representation of image pixel test and reference signals would be as follows:

| (a) | (definitely darker) | 0 0 |
| (b) | (definitely lighter) | 0 1 |
| (c) | (near average) | 1 0 |

Consider now the format for the test and reference pixel data. Utilizing two binary bits to represent each image pixel (as indicated above) an array of two hundred and fifty-six pixels requires a storage capacity of five hundred and twelve binary bits. Assuming a somewhat conventional magnetic stripe of 3.375 inches and a recording density of two hundred and ten bits per inch, approximately seven hundred bits can be recorded on a traditional card. Using five hundred and twelve bits for the pixel data leaves nearly two hundred bits for other use including error detection, confirming identification and so on.

Correlation of the test and reference image pixels involves a one-to-one comparison for each area represented. That is, for each elemental area of the photographic likeness 12, the reference pixel signal (two bits) and the test pixel signal (two bits) are compared. A favourable comparison produces a binary display pixel representation for white, e.g. one. An unfavourable comparison produces a binary pixel representation for black, e.g. zero. Accordingly, such signal representations drive the frame buffer 102 for accomplishing the display D.

In view of the above description, the operation of the terminal T will now be considered in detail with reference to FIGURE 4. In that regard, assume the presentation of a card C prepared and recorded as described above. With the aid of the card mechanism 75, the card C is moved through a pattern as indicated by the arrows 76. Consequently, the magnetic stripe reader 78 senses the magnetic stripe 14 to provide substantive data including five hundred and twelve binary bits representative of the two hundred and fifty-six image pixels of a reference display. Those bits are stored in the register 84 for subsequent use by the correlator 86.

As the card moves past the magnetic-stripe reader 78, it drops into a position for optical sensing by the quantizing control 80 and the image scanner 82. The quantizing control 80 simply senses the overall density of the image as a basis for establishing the three ranges of quantization. That is, based on the average optical density of the likeness 12 as sensed by the control 80, three broad ranges of quantizing are determined. As indicated above, the three ranges serve to classify each observed-pixel analog signal either as: (a) definitely darker than the average optical density, (b) definitely lighter than the average optical density or (c) in the range of the average optical density. Of course, other forms of thresholding are well known in the prior art and may be employed in different embodiments for use with the image scanner 82 which also may take a variety of different forms as well known in video and sensing technologies.

In the disclosed embodiment, the image scanner 82 scans the photographic likeness 12 (FIGURE 2) in a raster pattern to dissect the image indicia into an array of two hundred and fifty-six image pixels. A continuous analog-signal in accordance with these image pixels is supplied to the unit 94 for sampling and quantizing in accordance with the ranges (a), (b) and (c), as explained above. The unit 94, as a result, supplies quantized pixel-image sample signals of three different levels, to the digitizer 96, which converts the individual analog sample signals to a two-bit binary digital format. Accordingly, the digitizer 96 provides digital signal representations for two hundred and fifty-six pixels, each of two bits. The resulting five hundred and twelve bits are stored in the register 98. Thus, the data stored in the test register 98 has the same format as the data stored in the reference register 84.

A wide variety of correlators are well known in the prior art for comparing data to determine the degree of similarity. As mentioned above, in the disclosed embodiment, the correlator 86 simply performs a bit-by-bit correlation between reference and test image pixels. If the two bits representative of each of the similarly positioned pixels are identical, the correlator 86 provides a binary signal to the frame buffer 102 in a high state (representing one, white). Alternatively, if the representative reference and test data for a specific pixel area do not coincide, the correlator 86 provides a low level of the binary signal (indicative of a zero, black). Consequently, an array of ones and zeros are set in the frame buffer 102 corresponding to the picture, and the binary display D (FIGURE 1) provided in accordance therewith, is a pixel array or grid which is white except for those areas where the test and reference data does not compare favourably; for such pixels, the display is black.

The frame buffer 102 acts through the definition unit 106 to refresh the liquid-crystal dispay unit 108 (LCD) and provide the black-and-white binary display D. The display selector 104 is operable to vary the number of pixels in the display D, and may also accomplish displays limited to selective portions of the likeness 12.

The operator performs a relatively simple sequence of operations in using the terminal T to obtain guidance as to the authenticity of the card C.

Specifically, the operator initially checks the card C, visually, comparing the photographic likeness 12 with the physical appearance of the cardholder. If there is a sufficient degree of similarity, and the card otherwise appears proper, the operator enters the card in the slot S (FIGURE 1), moves it along the length of the slot and allows it to drop into the section 38.

The terminal senses the magnetic stripe 14 and optically dissects the photographic likeness 12 (FIGURE 2) to provide pixel image signals which are sampled, quantized and digitized as one of three values. Such digital signals are provided as test values for comparison with reference values from the magnetic stripe 14 on a pixel-by-pixel basis. Favourable comparisons produce a binary one and unfavourable comparisons produce a binary zero. Accordingly, a binary or black-and-white picture array is defined in the frame buffer 102 (FIGURE 4) which then drives the display unit 108 via the unit 106.

The correlator 86 also incorporates a register for counting the number of zeros representing black display pixels (unfavourable comparison). If the register counts a relatively small number of black display pixels, the green signals 90 is actuated. Alternatively, if a sizable number of black display pixels are counted, the red signal 88 is energized. An intermediate-count number of black display pixels actuates the amber signal 92 instructing the operator to consult the display D (FIGURE 1).

In considering the display D, the operator mentally correlates the areas of black pixels in the display D with areas of the photographic likeness 12 (FIGURE 2). The areas designated by black pixels indicate important interpretive information. First, as indicated above, if the black areas of the display D coincide with defects on the photographic likeness 12, the card C may be identified as being simply a worn or aged card and likely authentic. Alternatively, if the black pixels identify the area of the face 24 (FIGURE 2), there is probably good reason for greater concern. In such a case, the photographic likeness should attract attention as possibly having been altered or as being counterfeit.

Considering another possibility, if the black pixels designate the area of the digit 54, it is likely that the account number has been changed. Also, the occurrence of black pixels at the frame of the photographic likeness 12 might indicate a changed picture if, for example, the photographic likeness comprises a laminated photoprint; black pixels in the area of the face 24 also, as indicated above, suggest a problem. Thus, depending on the construction of the card C and the substance of the photographic likeness 12, considerable guidance is afforded to the operator by the specific designations of the areas of the photographic likeness 12 that do not compare well with the reference data.

7

As explained above, the crude or rough classification of pixels into a small number of classes, e.g. three, allows considerable deviation as a result of document use and ageing. However, in view of the considerable number of pixels, the test tends to be quite reliable. Also, as indicated above, the disclosed embodiment allows a display alternative. Specifically, the normal display (FIGURE 1, an eight-by-eight array) is provided in the initial operation. If greater detail is desired, the "detail" button 53 is depressed causing the display selector 104 to provide a sixteen-by-sixteen display array. In this event, the selector 104 segments each pixel of the normal display into a set of four sub-pixes, and it is these sub-pixels that are then displayed. It is to be noted in this regard, that a black pixel in the normal display may be segmented into sub-pixels that are not each black; the condition for a black pixel in the normal display can arise where only one of the constituent sub-pixels is black.

It is not necessary to read every pixel of a photograph when providing the recorded data. Using the checkerboard reading pattern, the screen is divided into one thousand and twenty-four pixels, but only half that number, five hundred and twelve pixels, are read during scanning. The number of one thousand and twenty-four is believed to provide: (i) the necessary discrimination within a single photograph to protect against effective alteration; and (ii) the necessary discrimination between different photographs to permit individual separation. From an information-theory standpoint, the number one thousand and twenty-four may be larger than necessary; but such will depend on applications and design considerations. In this regard, however, the only function of the photograph, as far as the terminal's circuitry is concerned, is to provide the two discrimination factors. Accurate representation of the photograph itself is neither obligatory nor in any way of value.

The system of the present invention accommodates to the production and use of a form of card (such as the card C) or other document that is economical, practical and can be reliably authenticated. Equipment for preparing cards such as the card C, for use in the method and system described above, may incorporate selected components of the system of FIGURE 4. Such equipment is illustrated in FIGURE 5, and names and references similar to those used in FIGURE 4 are used in FIGURE 5 to identify the components which bear direct similarity to components in FIGURE 4.

Referring to FIGURE 5, the card C is moved along a path designated by arrows 76 under control of card mechanism 75. During the course of that passage, the card C is sensed by quantizer control 80 and image scanner 82 to provide a signal to a sample and quantize unit 94 which in turn drives digitizer 96. Digital signals in accordance with the image pixels representing the dissection of the photographic likeness 12 (FIGURE 2), are as a consequence provided. These signals are supplied from the digitizer 96 to a recording buffer 120 which in turn drives a magnetic-stripe recorder 122.

The magnetic-stripe recorder 122 is positioned in alignment with the path defined by the arrows 76, so, following sensing of the photographic likeness 12 (FIGURE 1) and derivation of digital signals representative of its dissection, the derived signals are recorded on the magnetic stripe 14 (FIGURE 2). As indicated above, the magnetic stripe 14 may carry a variety of other data in accordance with well known teachings of the prior art. Such data might serve to confirm further the authenticity or validity of the card C. Also, such data might be employed to control use of the card C.

With equipment or a production terminal such as illustrated in FIGURE 5, the motion pattern of the card C differs from that of FIGURE 1. Specifically, the optical sensing precedes the magnetic recording. It is likely that cards such as the card C, would be produced using volume production techniques and with card movement completely mechanized.

From the above, it may be seen that systems and apparatus embodying the present invention can be effectively implemented and employed to identify subjects reliably for any of a variety of occurrences or transactions. It will also be apparent, as indicated above, that systems and apparatus incorporating the principles of the present invention may be variously implemented in a wide variety of different specific forms.

## Claims

1. A method of verification in which identification indicia (12) borne by a document or other item (C) are sensed to derive test signals dependent on the sensed indicia (12), and comparison is made for correlating the test signals with stored data (14) relating to the indicia (12) and providing an output (L) dependent on the correlation between them, characterised in that the test signals are representative of pixels of a sensed area that includes at least part of the said indicia (12), that the comparison is made between these signals and pixel-representative signals derived from the stored data (14), and that pixels (46) dependent on the comparison results are displayed to manifest the correlation graphically (D).

2. A method according to Claim 1 characterised in that the pixel-representative signals derived from the stored data are derived from data (14) stored on the said item (C).

3. A method according to Claim 2 characterised in that the data is stored in a magnetic record (14) on the said item (C).

4. A method according to any one of Claims 1 to 3 characterised in that the display (D) corresponds pixel-to-pixel (46) with the sensed area (12).

5. A method according to any one of Claims 1 to 4 characterised in that the display (D) is of binary pixel form (46).

6. A method according to any one of Claims 1 to 5 characterised in that the test signals are signals quantized to discrete thresholds of pixel-value within said area (12).

7. A method according to Claim 6 characterised in that the signal-quantization is related to two sensing-thresholds so as to establish three possible values for each test signal.

8. A method according to Claim 6 or Claim 7 characterised in that at least one of the sensing-thresholds is set in accordance with an average of sensed pixel-values within the said area (12).

9. A method according to any one of Claims 1 to 8 characterised in that verification is indicated as accepted (40; 90 FIG 4), uncertain (44; 92 FIG 4), or rejected (42; 88 FIG 4) according to whether the test signals overall meet one or the other of predetermined criteria defining acceptable, intermediate and unacceptable correlation with the stored data (14), and that the correlation is manifested graphically (D) as aforesaid at least in the event that verification is indicated as uncertain (44).

10. A method according to any one of Claims 1 to 9 characterised in that said area comprises at least part of a photographic image (12) represented on the said item (C).

11. A method according to Claim 10 characterised in that the photographic image (12) comprises a likeness (24, FIG 2) of an individual.

12. A method according to Claim 10 or Claim 11 characterised in that at least part of alpha-numeric information (10) borne by the said item (C) lies within said area (12).

13. A method according to Claim 12 characterised in that the alpha-numeric information, or part thereof (54 FIG 3), lying within said area, is superimposed therein with the said image (12).

14. A verification system in which means for sensing (82 FIG 4) identification indicia (12) borne by a document or other item (C) presented to the system, derives test signals dependent on the sensed indicia (12), and comparison (86 FIG 4) is made for correlating the test signals with stored data (14) relating to the indicia (12) and providing an output (L) dependent on the correlation between them, characterised in that the sensing means (82) derives the test signals as representative of pixels of a sensed area that includes at least part of the said indicia (12), that the comparison (86) is made between these signals and pixel-representative signals derived from the stored data (14), and that the system includes display means (D) for providing a graphic display dependent on the comparison results.

15. A system according to Claim 14 characterised in that it includes a reader device (78 FIG 4) for reading the stored data (14) from the document or other item (C) presented to the system.

16. A system according to Claim 15 characterised in that reader device is a magnetic-stripe reader (78).

17. A system according to any one of Claims 14 to 16 characterised in that the display (D) corresponds pixel-to-pixel (46) with the area (12) sensed by said sensing means (82).

18. A system according to any one of Claims 14 to 17 characterised in that the display (D) is of binary pixel form (46).

19. A system according to any one of Claims 14 to 18 characterised in that the display means comprises a liquid-crystal device (D).

20. A system according to any one of Claims 14 to 19 characterised in that the test signals are derived as signals quantized to discrete thresholds of pixel-value within said area (12).

21. A system according to Claim 20 characterised in that the signal-quantization is related to two sensing-thresholds so as to establish three possible values for each test signals.

22. A system according to Claim 20 or Claim 21 characterised in that means (80 FIG 4) is provided for deriving an average of sensed pixel-values within the said area (12), and that at least one of the sensing-thresholds is set in accordance with the derived average.

23. A system according to any one of Claims 14 to 22 characterised in that it includes indicator means (L) for indicating that verification is accepted (40; 90 FIG 4), uncertain (44; 92), or rejected (42; 88) according to whether the test signals overall meet one or the other of predetermined criteria defining acceptable, intermediate and unacceptable correlation with the stored data, and that the correlation is manifested graphically (D) as aforesaid, at least in the event that verification is indicated as uncertain (44).

24. A system according to any one of Claims 14 to 23 characterised in that the display means (D) includes provision (53) for selectively increasing the number of pixels (46) displayed.

25. A method of producing a document or other item (C) for use in a method or with a system according to any one of Claims 1 to 24 in which indicia (12) borne by the said item (C) is sensed and signals in accordance with the sensed indicia (12) are recorded on the said item (C) in machine-readable form (14), characterised in that the signals are representative of pixels of a sensed area (12) of said item (C) that includes at least part of the said indicia (12).

FIG. 1

FIG. 2

*FIG. 3*

*FIG. 5*

FIG. 4